# EUROPEAN PATENT APPLICATION

(11) **EP 2 160 945 A1**
(43) Date of publication of application: **10.03.2010**
(21) Application number: 08163912.2
(22) Date of filing: 09.09.2008
(51) Int. Cl.: A01N 59/16, A01N 59/20, A01N 25/04, A01N 25/10, A01N 25/26, A01N 25/30, A01N 25/34, A01P 1/00, B01D 69/02, C02F 1/50

(54) **Antimicrobial Article**

(71) Applicant: Polymers CRC Limited, Notting Hill, VIC 3168 (AU)
(72) Inventor: Ramaswamy, Arun, Prasath, Coimbatore 641020, Tamil Nadu (IN); Stenzel, Martina, H., Pagewood NSW 2035 (AU)
(74) Representative: Upschulte, Manfred Alois

(57) **Abstract**

The instant invention relates to an antimicrobial article. The antimicrobial article comprises a substrate, metal particles having bacteriostatic or biocidal properties and an amphiphilic copolymer. Further aspects of the invention are the preparation of such an antimicrobial article and the use of an amphiphilic copolymer together with biocidal metal particles for preparing an antimicrobial article. The antimicrobial article exhibits improved biocidal efficacy.

## Description

The instant invention relates to an antimicrobial article. The antimicrobial article comprises a substrate, metal particles having bacteriostatic or biocidal properties and an amphiphilic copolymer. Further aspects of the invention are the preparation of such an antimicrobial article and the use of an amphiphilic copolymer together with biocidal metal particles for preparing an antimicrobial article. The antimicrobial article exhibits improved biocidal efficacy.

It is known that polymers and plastics, e.g. when used as coatings on substrates can suffer from bacterial or algal decay if routinely exposed to water, dampness or moisture.
Biofilms of communities of bacteria and algae can settle on the surfaces of these substrates and increase the speed of decay and/or loss of efficacy. The use of certain organic antimicrobials in air filter systems has already been proposed; US-A-2003-038074 teaches incorporation of a non-metallic antimicrobial agent such as 2,4,4'-trichloro-2'-hydroxy diphenyl ether into semi-permeable membranes. Also US Pat. No. 5102547 discloses a semi-permeable polymeric membrane in which unmodified metals such as silver, copper and antimony are incorporated into a polymer. US Pat. No. 6652751 teaches attachment of bacteriostatic metal ions to a surface of a preformed polymeric membrane by static adsorption/absorption or mixing the metal salt into polymeric solution and casting into a bath containing a reducing agent.

For example, silver is a well-known bactericide that possesses antibacterial properties for a broad spectrum of bacterial strains and is relatively non-toxic to human cells. Silver has previously been incorporated in polymer materials, such as membranes, foams and fabrics, and used in various applications where antimicrobial activity is desired, such as in water treatment and biomedical applications.

However, one problem encountered with antimicrobial materials containing, for example, silver is that silver is lost from the material over time, leading to reduced biocidal effectiveness of the material. Moreover, the loss of silver generally does not occur in a controlled manner.

Another problem associated with silver particles that are dispersed in polymeric materials is aggregation of the particles in the materials, leading to an uneven distribution of the silver particles in the polymer material. The aggregates are difficult to break up and may compromise the biocidal efficiency of the material in which the silver particles have been dispersed. Electrostatic interactions between the silver particles are thought to contribute to the aggregation.

It has been found that the undesirable leaching of metal particles (e.g. silver) from the substrate of an antimicrobial article (e.g. antimicrobial membrane) can be reduced by incorporation of an amphiphilic copolymer in the article. The amphiphilic copolymer interacts with both the metal particles and the substrate and aids in the retention of the metal particles in the substrate material. This in turn, helps to reduce undesirable loss of the metal particles and improves the biocidal efficacy of the antimicrobial article.

The amphiphilic copolymer may also help to control the release of metal (e.g. silver) ions from the substrate and thus provide avenues to control the biocidal activity of the antimicrobial article. In some cases, the amphiphilic copolymer may also immobilise the silver particle or any antimicrobial metal or agent in the substrate in such a way the antimicrobial article can be contact active materials.

It has been further found that encapsulation of biostatic or biocidal silver particles by an amphiphilic copolymer leads to reduced aggregation of the silver particles and results in a more homogeneous distribution of the particles in an antimicrobial article. Moreover, the silver particles prepared in the presence of an amphiphilic copolymer exhibit variation in size and shape. Literature reports suggest that silver particles of different size and shape may possess differences in antimicrobial activity (Applied and Environmental Microbiology, 2007, 73(6), 1712-1720).

In one aspect the present invention provides an antimicrobial article comprising:
(i) a substrate;
(ii) a composite particle comprising a metal particle and an amphiphilic copolymer dispersed in the substrate.
wherein the amphiphilic copolymer comprises a first portion adapted to interact with the metal particles and a second portion adapted to interact with the substrate.

The antimicrobial article comprises a substrate. The substrate may be comprised of any suitable material and is not particularly limited. The choice of substrate material may be dictated by the desired application in which the antimicrobial article is to be employed.

For example the substrate is a natural or synthetic polymer.

For instance the substrate is a thermoplastic or crosslinked polymer, preferably a thermoplastic polymer.

Examples of suitable polymers are given below.
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).

Polyolefins, i.e. the polymers of monoolefins exemplified in the preceding paragraph, preferably polyethylene and polypropylene, can be prepared by different, and especially by the following, methods:
a) radical polymerisation (normally under high pressure and at elevated temperature).
b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethyleneacrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch. Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
6c. Hydrogenated aromatic polymers derived from hydrogenation of polymers mentioned under 6a.). Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or polym-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimides, polyesterimides, polyhydantoins and polybenzimidazoles.
18. Polyesters derived from dicarboxylic acids and diols and/or from hydroxycarboxylic acids or the corresponding lactones or lactides, for example polyethylene terephthalate, polybutylene terephthalate, poly-1,4-dimethylolcyclohexane terephthalate, polyalkylene naphthalate and polyhydroxybenzoates as well as copolyether esters derived from hydroxyl-terminated polyethers, and also polyesters modified with polycarbonates or MBS. Copolyesters may comprise, for example - but are not limited to - polybutylenesuccinate/terephtalate, polybutyleneadipate/terephthalate, polytetramethyleneadipate/terephthalate, polybutylensuccinate/- adipate, polybutylensuccinate/carbonate, poly-3-hydroxybutyrate/octanoate copolymer, poly-3-hydroxybutyrate/hexanoate/decanoate terpolymer. Furthermore, aliphatic polyesters may comprise, for example - but are not limited to - the class of poly(hydroxyalkanoates), in particular, poly(propiolactone), poly(butyrolactone), poly(pivalolactone), poly(valerolactone) and poly(caprolactone), polyethylenesuccinate, polypropylenesuccinate, polybutylenesuccinate, polyhexamethylenesuccinate, polyethyleneadipate, polypropyleneadipate, polybutyleneadipate, polyhexamethyleneadipate, polyethyleneoxalate, polypropyleneoxalate, polybutyleneoxalate, polyhexamethyleneoxalate, polyethylenesebacate, polypropylenesebacate, polybutylenesebacate and polylactic acid (PLA) as well as corresponding polyesters modified with polycarbonates or MBS. The term "polylactic acid (PLA)" designates a homo-polymer of preferably poly-L-lactide and any of its blends or alloys with other polymers; a co-polymer of lactic acid or lactide with other monomers, such as hydroxy-carboxylic acids, like for example glycolic acid, 3-hydroxy-butyric acid, 4-hydroxy-butyric acid, 4-hydroxy-valeric acid, 5-hydroxy-valeric acid, 6-hydroxy-caproic acid and cyclic forms thereof; the terms "lactic acid" or "lactide" include L-lactic acid, D-lactic acid, mixtures and dimers thereof, i.e. L-lactide, D-lactide, meso-lacide and any mixtures thereof.
19. Polycarbonates and polyester carbonates.
20. Polyketones.
21. Polysulfones, polyether sulfones and polyether ketones.
22. Crosslinked polymers derived from aldehydes on the one hand and phenols, ureas and melamines on the other hand, such as phenol/formaldehyde resins, urea/formaldehyde resins and melamine/formaldehyde resins.
23. Drying and non-drying alkyd resins.
24. Unsaturated polyester resins derived from copolyesters of saturated and unsaturated dicarboxylic acids with polyhydric alcohols and vinyl compounds as crosslinking agents, and also halogen-containing modifications thereof of low flammability.
25. Crosslinkable acrylic resins derived from substituted acrylates, for example epoxy acrylates, urethane acrylates or polyester acrylates.
26. Alkyd resins, polyester resins and acrylate resins crosslinked with melamine resins, urea resins, isocyanates, isocyanurates, polyisocyanates or epoxy resins.
27. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
28. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
29. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

In a specific embodiment the substrate is a hydrophobic thermoplastic polymeric material. In one embodiment the substrate is a polymeric membrane material. Examples of suitable substrate materials include polysulfone, polyethersulfone, polyvinylidene fluoride, poly(tetrafluoroethene), polyamide, polyurethane, polystyrene, polyalkylene (e.g. polypropylene), polycarbonate, poly(alkylene carbonate)s, polyarylene, poly(aryl ether ketones), poly(aryl substituted), polyether, polyamide, polycellulose and polycellulose with functional groups, such as carboxyl, amine, nitrile, hydroxyl, cyano, ether or thiol groups.

The antimicrobial article also comprises metal particles dispersed in the substrate. Any metal particle that possesses bacteriostatic or biocidal activity may be employed. Preferably the metal particles comprise at least one metal selected from the group consisting of gold (Au), silver (Ag), copper (Cu), zinc (Zn), titanium (Ti), palladium (Pd), platinum (Pt), iron (Fe), zirconium (Zr) or an oxide thereof.

Preferably the metal particles are silver.

Metal particles comprising composites of antimicrobially active metals and metal oxides may also be used. The metal particles preferably have a particle size in the range of from about 5-1000 nm, more preferably in the range of from about 5-500 nm. In a preferred embodiment the antimicrobial article comprises silver nanoparticles.

The elemental silver may be micro scaled or may be nano scaled. Nano scaled antibacterial silver is disclosed for example in U.S. Pat. No. 6,822,034, the relevant disclosure of which is hereby incorporated by reference. Nanosilver usually has mean particle sizes from the range 5 to 500 nm; minor amounts of the silver in this material may be in the form of silver oxide.

The antimicrobial article further comprises an amphiphilic copolymer. The amphiphilic copolymer comprises a first portion adapted to interact with the metal particles and a second portion adapted to interact with the substrate. In one embodiment, the first portion of the amphiphilic copolymer is hydrophilic and the second portion of the amphiphilic copolymer is hydrophobic.

For example the amphiphilic copolymer is a diblock or comb copolymer wherein the first portion is hydrophilic and the second portion is hydrophobic. The amphiphilic copolymer can have any value of HLB of about 1 to about 20.

It is an advantage of the invention that the amphiphilic copolymer binds the metal particles to the substrate and thereby helps to reduce leaching of the metal particles.

It is preferred that the hydrophilic portion of the amphiphilic copolymer be capable of interacting with the metal particles though mechanisms including ionic or electrostatic bonds, complexation and encapsulation.

In one embodiment, the hydrophilic portion of the amphiphilic copolymer comprises a moiety that interacts with the metal particle.

Suitable moieties include electronegative moieties and ligands capable of interacting with the metal particle.

Moieties containing functional groups, such as carbonyl, amino, pyridyl, nitrile, hydroxyl, cyano, urethanes, ether and thiol are preferred. In one preferred embodiment, the hydrophilic portion is derived from a monomer comprising an amide or acid group.

Examples of such monomers include dimethylacrylamide, isopropylacrylamide, vinyl pyridine, acrylic acid and maleic acid. Any suitable hydrophilic polymerisable monomer can form the hydrophilic portion of the amphiphilic copolymer. The functional polymerisable monomers may be acrylic acid, acrylamide, dimethyl amino alkyl acrylamide, methacrylic acid, vinyl acetate, vinyl pyrrolidinone, vinyl pyridinium bromide, sodium 4-styrene sulfonate2-hydroxyethyl methacrylate, glycidyl methacrylate, 2-acrylamidoglycolic acid, 3-sulfopropyl methacrylate, 2-acrylamido-2-methyl-1-1-propane sulfonic acid, 2-dimethyl amino-ethyl methacrylate, 2-trimethylammonium-ethyl methacrylate chloride, tributyl (4-vinyl- benzylphosphonium salts, N, N, Dimethyl-N-methylacryloxyethyl-N-(3-sulfopropyl), butyl methacrylate, PEG-methacrylate, N-isopropylacrylamide, methacryloyloxyl ethyl phosphorylcholine, poly(oxyethylene methacrylate), vinylbenzyl tetramethylene sulfonium tetrafluoroborate, titanium trialkoxide methacrylates, fluorinated functional PEG, polymerisable surfactants, any polymerisable oligomers.

In one embodiment, the hydrophilic portion is derived from at least one monomer selected from the group consisting of isopropylacrylamide and acrylic acid.

For example the hydrophilic portion is derived from a monomer comprising a carbonyl or amino or amide or pyridyl or nitrile or hydroxyl or cyano, or urethanes or ether or thiol or any acid functional group or any electronegative moieties containing monomers or any ligands containing monomers which can have capable of interacting with metal.

The hydrophobic portion of the amphiphilic copolymer is not particularly limited as any hydrophobic moiety that is compatible with, and capable of interacting with, the substrate may be employed. The composition of the hydrophobic portion will, to some degree, be dictated by the choice of substrate desired for the antimicrobial article. In one embodiment the hydrophobic portion is derived from a monomer comprising an aromatic group. As such, the hydrophobic portion therefore comprises at least one and preferably, a plurality of aromatic groups.

In one preference the hydrophobic portion is comprised of polyethersulfone, polysulfone, or poly(styrene).

The amphiphilic copolymer may be of any structure or architecture, including block, comb, brush, hyperbranched, dendritic and random copolymer structures and any combination thereof. In one preference, the amphiphilic copolymer is a block copolymer, such as a diblock, tri-block or a comb copolymer. As used herein, the term "block copolymer" refers to a polymer which is made up of two or more covalently polymeric segments, wherein at least one polymeric segment is different in composition to at least one other polymeric segment. For example, polystyrene-block-polyNIPAM (N-isopropylacrylamide (NIPAM)) is a block copolymer because it consists of a segment of polystyrene covalently linked to a segment of poly(NIPAM).

The amphiphilic copolymer may also be of any suitable molecular weight. The molecular weight of the amphiphilic copolymer is preferably at least about 1000, more preferably between 10,000 to 50,000, even more preferably between 50,000 to 100,000 and most preferably between 100,000 to 1000,000. Higher molecular weights may be preferred in some instances as this can help to reduce the leaching of the metal particles even further.
The relative proportions (or ratio) of the first and second portions of the amphiphilic copolymer may be of any value. For example, the amphiphilic copolymer may comprise 10% of the first (preferably hydrophilic) portion with the remaining 90% of the copolymer being comprised of the second (preferably hydrophobic) portion. It is preferred that the ratio of the first portion to the second portion of the amphiphilic copolymer be in the range of 1:0.10 to 0.10:1, more preferably 1:0.25 to 0.25:1, 1:0.5 to 0.5:1, even more preferably 1:0.75 to 0.75 to 1 and most preferably 1:1.

The amphiphilic copolymer may be prepared using any suitable technique. Preferably, the amphiphilic copolymer is prepared under controlled free radical polymerization conditions. Examples of controlled radical polymerization techniques include Reversible-Addition Fragmentation chain Transfer (RAFT) polymerization, atom transfer radical polymerization (ATRP) and nitroxide mediated polymerization techniques (NMRP). Controlled free radial conditions may help to produce amphiphilic copolymers of defined structure, composition and/or molecular weight.

Under the term RAFT there is understood reversible addition fragmentation chain transfer polymerization (RAFT), which is a well known controlled free radical polymerization technique and for example described in WO 98/01478, WO98/58974, WO 99/31144, WO 99/05099, WO 02/094887, WO 02/26836, WO 01/42312, WO 00/75207, and WO 99/35177.

Under the term ATRP there is understood atom transfer radical polymerization (ATRP). This type of controlled free radical polymerization is, for example, described in WO 96/30421.

Under the term NMRP there is understood nitroxyl mediated radical polymerization, a free radical polymerization process by controlled or "living" growth of polymer chains, which produces defined oligomeric homopolymers and copolymers, including block and graft copolymers. In U.S. 4,581,429 disclosed is the use of initiators of the partial formula R'R"NO-X. In the polymerization process the free radical species R'R"N-O• and •X are generated. •X is a free radical group, e.g. a tert.-butyl or cyanoisopropyl radical, capable of polymerizing monomer units containing ethylene groups.

A variation of the above process is disclosed in US 5 322 912 wherein the combined use of a free radical initiator and a stable free radical agent of the basic structure R'R"N-O• for the synthesis of homopolymers and block copolymers is described.

The antimicrobial article may comprise from about 0.5 to 75 wt% of the amphiphilic copolymer and from about 0.01 to 50 wt % of metal particles.

In one embodiment the amphiphilic copolymer covers at least a portion of the surface of each metal particle. Preferably, the amphiphilic copolymer substantially surrounds the metal particles and more preferably, the amphiphilic copolymer encapsulates the metal particles. In another embodiment the amphiphilic copolymer and the metal particles may together form composite particle that is dispersed in the substrate. In another aspect the present invention provides an antimicrobial article comprising a substrate and a composite particle comprising a metal particle and an amphiphilic copolymer dispersed in the substrate.
In one embodiment the composite particle comprises a metal particle that is substantially surrounded by, and preferably, is encapsulated by, the amphiphilic copolymer. It is one advantage of the invention that encapsulation of the metal particles by the amphiphilic copolymer assists in providing a more even distribution of the metal particles throughout the substrate. Preferably the antimicrobial article comprises from about 0.01 to 75 wt% of the composite particle.

The antimicrobial article of the invention may be of any form. In one embodiment the antimicrobial article is a membrane. Antimicrobial membranes may be used in water treatment or other applications where biofouling can occur.

Polymeric membranes may be prepared from organic polymers, e.g. as commonly listed in WO04/106311 page 48, bottom paragraph, until page 54 (item 29). Preferred polymers are cellulose acetates, polyacrylonitriles, polyamides, polyolefins, polyesters, polysulfones, polyethersulfones, bisphenols, polyether ketones, sulfonated polyether ketones, polyamide sulfones, polyvinylidene fluorides, polyvinylchlorides and other chlorinated polyethylenes, polystyrenes and polytetrafluorethylenes or mixtures thereof. More preferred membrane polymers are polyolefines, polyester, polyvinylidenefluoride, aromatic polysulfones, aromatic polyphenylene-sulfones, aromatic polyethersulfones, polyamide, and their copolymers, or the group consisting of polyolefins, polyester, polyvinylidenefluoride, polysulfone, polyethersulfone, polyamide, and their copolymers, as well as other polymers commonly used in fabrication of membranes and known as state of the art.

The antimicrobial article may be prepared using any suitable process.

In one embodiment the antimicrobial article is prepared via a two-step process that firstly involves the preparation of composite particles comprising a metal particle and the amphiphilic copolymer, followed by mixing of the composite particles with the substrate material. The resulting mixture is then used to form the antimicrobial article.

These composite particles are suited to any membrane applications (such as water filtration membranes, separation of gases and liquids) but may also be used in medical applications, such as medical devices and wound dressings where improved biocidal efficacy and/or controlled release of antimicrobial agents are desired.

The antimicrobial article may be formed using any suitable technique. In one embodiment the article is formed by casting a solution comprising the composite particles and a substrate material onto a supporting material, such as a glass plate. Conventional methods for forming antimicrobial articles and in particular, antimicrobial membranes would be known to a person skilled in the relevant art.

The process of antimicrobial membrane preparation often follows the steps as outlined below:
In step 1, polymers are dissolved in an organic solvent, such as N-methyl pyrrolidone, dichloromethane, dimethylformamide (DMF), dimethylacetamide, etc. or a suitable solvent mixture, e.g. mixture of these. Other common solvents are found in the literature. In step 2, the composite particles are added to the fraction of solvent and are well dispersed, e.g. using ultrasonic mixer or any other suitable mixing devices. In step 3, the composite particles are dispersed throughout the polymer solution, e.g. using a mechanical stirrer at optimum speed. In step 4, other additives (mainly organic and/or polymeric such as listed below, e.g. pore formers and/or hydrophilic additives) commonly used in membrane compositions may be added to the mixture of composite particles and polymer. In step 5 the resulting solution is cast into a thin film membrane by known methods resulting in a semi permeable or dense membrane with dispersed antimicrobial at least on one side of the membrane. Alternatively, in step 5 the resulting solution is metered into a non-solvent of the polymers where the polymers precipitate in a controlled way to form a semipermeable or dense membrane with the dispersed composite particles. Further alternatives of membrane preparation are tracketching, stretching, leaching, interfacial polymerization, sintering, sol-gel processes, adding an active membrane layer, grafting, sputter deposition.
The membrane may be used as a stand alone membrane or may be cast on a support to make a composite membrane. Often used are semi-permeable membranes.
Further additives such as antimicrobials may also be present in the polymer membranes, for instance di- or trihalogeno-hydroxydiphenylethers such as Diclosan or Triclosan, 3,5-dimethyl-tetrahydro-1,3,5-2H-thiodiazin-2-thione, bis-tributyltinoxide, 4.5-dichlor-2-n-octyl-4-isothiazolin-3-one, N-butyl-benzisothiazoline, 10.10'-oxybisphenoxyarsine, zinc-2-pyridinthiol-1-oxide, 2-methylthio-4-cyclopropylamino-6-(α,β-dimethylpropylamino)-s-triazine, 2-methylthio-4-cyclopropylamino-6-tert-butylamino-s-triazine, 2-methylthio-4-ethylamino-6-(α,β-dimethylpropylamino)-s-triazine, 2,4,4'-trichloro-2'-hydroxydiphenyl ether, IPBC, carbendazim or thiabendazole.

Further additives useful may be selected from the materials listed below, or mixtures thereof:
1. Antioxidants:
1.1. Alkylated monophenols, for example 2,6-di-tert-butyl-4-methylphenol,
1.2. Alkylthiomethylphenols, for example 2,4-dioctylthiomethyl-6-tert-butylphenol,
1.3. Hydroquinones and alkylated hydroquinones, for example 2,6-di-tert-butyl-4-methoxyphenol, 2,5-di-tert-butylhydroquinone,
1.4. Tocopherols, for example α-tocopherol,
1.5. Hydroxylated thiodiphenyl ethers, for example 2,2'-thiobis(6-tert-butyl-4-methylphenol),
1.6. Alkylidenebisphenols, for example 2,2'-methylenebis(6-tert-butyl-4-methylphenol),
1.7. O-, N- and S-benzyl compounds, for example 3,5,3',5'-tetra-tert-butyl-4,4'-dihydroxydibenzyl ether,
1.8. Hydroxybenzylated malonates, for example dioctadecyl-2,2-bis(3,5-di-tert-butyl-2-hydroxybenzyl)malonate,
1.9. Aromatic hydroxybenzyl compounds, for example 1,3,5-tris(3,5-di-tert-butyl-4-hydroxybenzyl)-2,4,6-trimethylbenzene,
1.10. Triazine compounds, for example 2,4-bis(octylmercapto)-6-(3,5-di-tert-butyl-4-hydroxyanilino)-1,3,5-triazine,
1.11. Benzylphosphonates, for example dimethyl-2,5-di-tert-butyl-4-hydroxybenzylphosphonate,
1.12. Acylaminophenols, for example 4-hydroxylauranilide,
1.13. Esters of β-(3,5-di-tert-butyl-4-hydroxyphenyl)propionic acid with mono- or polyhydric alcohols,
1.14. Esters of α-(5-tert-butyl-4-hydroxy-3-methylphenyl)propionic acid with mono- or polyhydric alcohols,
1.15. Esters of β-(3,5-dicyclohexyl-4-hydroxyphenyl)propionic acid with mono- or polyhydric alcohols,
1.16. Esters of 3,5-di-tert-butyl-4-hydroxyphenyl acetic acid with mono- or polyhydric alcohols,
1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide,
1.18. Ascorbic acid (vitamin C), 1.19. Aminic antioxidants, for example N,N'-di-isopropyl-p-phenylenediamine.
2. UV absorbers and light stabilizers:
2.1. 2-(2'-Hydroxyphenyl)benzotriazoles, for example 2-(2'-hydroxy-5'-methylphenyl)-benzotriazole,
2.2. 2-Hydroxybenzophenones, for example the 4-hydroxy derivatives,
2.3. Esters of substituted and unsubstituted benzoic acids, for example 4-tert-butyl-phenyl salicylate,
2.4. Acrylates, for example ethyl α-cyano-β,β-diphenylacrylate,
2.5. Nickel compounds, for example nickel complexes of 2,2'-thio-bis[4-(1,1,3,3-tetramethylbutyl)phenol],
2.6. Sterically hindered amines, for example bis(2,2,6,6-tetramethyl-4-piperidyl)sebacate.
2.7. Oxamides, for example 4,4'-dioctyloxyoxanilide,
2.8. 2-(2-Hydroxyphenyl)-1,3,5-triazines, for example 2,4-bis(2,4-dimethylphenyl)-6(2-hydroxy-4-octyloxyphenyl [or-4-dodecyl/tridecyloxyphenyl])-1,3,5-triazine.
3. Metal deactivators, for example N,N'-diphenyloxamide.
4. Phosphites and phosphonites, for example triphenyl phosphite.
5. Hydroxylamines, for example N,N-dibenzylhydroxylamine.
6. Nitrones, for example, N-benzyl-alpha-phenylnitrone.
7. Thiosynergists, for example dilauryl thiodipropionate.
8. Peroxide scavengers, for example esters of β-thiodipropionic acid.
10. Basic co-stabilizers, for example melamine.
11. Nucleating agents, for example inorganic substances, such as talcum, metal oxides.
12. Fillers and reinforcing agents, for example calcium carbonate, silicates.
13. Other additives, for example plasticisers, lubricants, emulsifiers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839, EP-A-0591102; EP-A-1291384.

For more details on stabilizers and additives useful, see also list on pages 55-65 of WO 04/106311, which is hereby incorporated by reference.

The composite particle in the antimicrobial article may be prepared by any suitable process.

In one embodiment the composite particle is prepared by a process comprising the steps of:
(i) providing a mixture comprising a precursor of a metal particle and an amphiphilic copolymer; and
(ii) reacting the precursor under conditions allowing formation of the metal particle in the presence of the amphiphilic copolymer.

Preferably, the process results in the amphiphilic copolymer covering at least a portion of the surface of the ensuing metal particle. More preferably, the amphiphilic copolymer substantially surrounding the metal particle and most preferably, the amphiphilic copolymer encapsulates the metal particle.

The precursor used in the process for forming the composite particle is preferably a metal salt. Preferably, the precursor is a corresponding metal salt of any one of the aforementioned bacteriostatic or biocidal metals. In one embodiment the metal particles are silver particles and the precursor is a silver salt such as silver nitrate, silver trifluoro methane sulfonate, silver tetrafluoroborate or any silver salts that can form silver metal by any means.

In one embodiment the precursor is reduced to form the metal particle. The precursor may be reduced using chemical, thermal, radiation, ultrasonic, electrochemical or microwave techniques.

Preferably the precursor is reacted with a reducing agent under appropriate conditions to form the metal particle. Examples of suitable reducing agents include dimethylformamide (DMF), sodium borohydride (NaBH₄) and hydrazine or any chemical reducing agents. When reducing agents are used, the quantity of reducing agent employed in the process will typically be sufficient to form an effective amount of metal particles. A preferred reducing agent is DMF but not limited.

The reaction of the precursor may be performed in a solvent. In one embodiment the solvent may also act as a reducing agent for the metal particle precursor. An example of a solvent that may act as a reducing agent is dimethylformamide (DMF). In one embodiment the solvent may also act as a reducing agent for the metal particle precursor. An example of a solvent that can act as a reducing agent is dimethylformamide (DMF). In one embodiment the precursor is reduced by substrate materials itself (example polyethersulfone or any substrate which can reduce the precursor) and/or the amphiphilic copolymer and/or the progens (example polyethylene glycol 400 or any higher molecular weight polyalkylene glycols can be used) or combination of substrate, amphiphilic copolymer, progens and other chemicals which can reduce the precursor.

The antimicrobial article may contain metal particles of different size and shape. The size and/or shape may be dictated by amphiphilic copolymer/polymer and the processing conditions used to form the metal particles. For example, reaction conditions (including temperature and solvent conditions), the molecular weight and composition of the amphiphilic copolymer/polymer and/or the ratio of metal precursor to copolymer/polymer may each influence the resulting metal particle size and/or shape.

It has been found that metal particals, such as silver particles with polyhedral shapes or various shapes such as spherical, triangular, cube, hexagonal, octahedral, rod can be prepared when silver nitrate is reduced in the presence of the copolymer polystyrene-b-poly(*N*-isopropylacrylamide(PS-b-PIPAAm).

One advantage of the invention is that the metal particles are immobilised on the substrate by the amphiphilic copolymer, thus leading to an article having an improved anti-biofouling effect due to reduced loss (or leaching) of the metal particles.

Another advantage of the invention is that release of the metal particles can be controlled under specific conditions by the use of amphiphilic copolymers that are responsive to defined stimuli.

A further advantage of the invention is that the metal particles are more evenly distributed on both the surface of the substrate material and within the substrate material due to reduced aggregation of the metal particles as a result of their encapsulation by the amphiphilic copolymer.

Another aspect of the invention is the use of a composite particle as defined above for the manufacturing of an antimicrobial article.

All definitions and preferences defined above apply equally for all aspects of the invention.

The following examples illustrate the invention.

### Example 1 Preparation of silver hybrid copolymers

### 1.1 Preparation of silver - Polysulfone-comb-acrylic acid PSU-comb-PAA (hydrolyzed product of polysulfone-comb-t-butylacrylate) composite

Silver nitrate (42 mg) dissolved in 3 mL DMF is added to PSU-comb-PAA (Mwt -80,000) (185mg) in 22mL DMF at 80 °C/115 °C in a 100 ml round bottle. The reaction mixture is stirred for a definite period (3 days at 80°C and 36 h at 115° C). The silver containing PSU-comb-PAA composite particles are seperated by adding water and washed well with water. The UV-Vis spectra of silver containing PSU-comb-PAA show an absorption in the range of 350 to 450 nm with a peak maximum at 430 nm. The silver absorbance peak around 430 nm confirms the presence of silver particles. From TEM images, it is clearly observed that the silver particles are encapsulated by the polymer, PSU-comb-PAA. The silver particles size is found around 100-500 nm (in acetonitrile).

### 1.2 Preparation of poly(styrene-co-maleic acid) - silver composite

Poly(styrene-co-maleic acid (PS-co-MA) (Mv -65,000). PS-co-MA (520 mg) and a sodium hydroxide solution (640 mg, 20 ml of distilled water) are added to 2L of double distilled water in a 3L beaker. The solution is heated to boiling on a hot plate with continuous stirring (glass rod). At boiling, a solution of silver nitrate (264 mg in 20 ml distilled water) is added slowly and countinously. The reaction mixture is allowed to boil gently for a further 10 minutes. The colloid is then cooled to room temperature. Particle sizes are found about 100-200 nm (in acetonitrile).

### 1.3 Preparation of silver composite with copolymers in DMF

Polymer of defined molecular weight (-200mg) [polystyrene macroRAFT or polystyrene-b-poly (isopropylacrylamide) or polystyrene-b-polydimethylacrylate or polystyrene-b-polyacrylicacid] is dissolved in DMF (-17 mL). Silver nitrate (-130mg) in DMF (-3 mL) is added to the above solution at defined temperature (40/60/80°C) to have silver containing copolymer (hybrid particle). The change in silver absorbance peak in UV-vis range confirms the formation silver particles of various shapes with PS-b-PIPAAm in DMF. Silver particles of of various polyhedral shapes (spherical, triangular, cube, hexagonal, octahedral, rod, etc) and size (5-300nm) are formed using PS-b-PIPAAm. The silver containing copolymer composite particles are separated by adding mixture of water and acetonitrile, and washed well with water.

### 2. Preparation of antimicrobial PES membrane

### 2.1 Blending of hybrid silver particles with PES membranes (using PSU- comb-PAA-Ag)

Polyether sulfone membrane (PES, 3.57 gm) is dissolved in 10 g of NMP (N-methylpyrrolidon) at 60 °C. To the viscous solution, well dispersed composite particle additives (300 mg of PSU-comb-PAA-Ag prepared in accordance with Example 1.1) in 2.75 gm of NMP are added and stirred in a mechanical stirrer to have homogenous solution at 60 °C. Then PEG-400, 8.55 gm is added slowly with stirring to have a honey like viscous homogeneous solution. The casting solution was left overnight to allow complete release of air bubbles. The solution is cast onto a glass plate with a glass rod and immersed in a coagulation bath of deionized water. The formed membranes are peeled off and subsequently washed with deionized water to remove solvents and other organic residue. The SEM images show well dispersed hybrid materials (100-500 nm) in the PES membrane.

### 2.2 Blending of hybrid silver particles with PES membranes (using PS-co-MA-Ag)

Polyether sulfone membrane (PES) (4.23gm) is dissolved in NMP (N-methylpyrrolidon, 14.45 gm). To the above viscous solution, well dispersed composite particle additive, (275 mg in 1 gm NMP) PS-co-MA-Ag (prepared in accordance with Example 1.2) is added and stirred in a mechanical stirrer to have homogenous solution at 60 °C. After that PEG (1 0.26gm) is added slowly with stirring to have a honey like viscous homogeneous solution. The casting solution is left overnight to allow complete release of air bubbles. The solution is cast onto a glass plate with a glass rod and immersed in a coagulation bath of deionized water. The formed membranes are peeled off and subsequently washed with deionized water to remove solvents and other organic residue. SEM images of PES membranes containing PS-co-MA-silver particles show well dispersed hybrid materials (1 00-300nm) in the PES membrane.

### 2.3 Blending of hybrid silver particles with PES membranes (using PS-b-PIPAAm-Ag)

Polyether sulfone membrane (PES) (4.23gm) is dissolved in NMP (N-methylpyrrolidon, 14.45 gm). To the above viscous solution, well dispersed composite particle additive, (275 mg in 1 gm NMP) PS-b-PIPAAm-Ag (prepared in accordance with Example 1.3) is added and stirred in a mechanical stirrer to have homogenous solution at 60 °C. After that PEG (10.25gm) is added slowly with stirring to have a honey like viscous homogeneous solution. The casting solution is left overnight to allow complete release of air bubbles. The solution is cast onto a glass plate with a glass rod and immersed in a coagulation bath of deionized water. The formed membranes are peeled off and subsequently washed with deionized water to remove solvents and other organic residue. SEM images of PES membranes containing PS-b-PIPAAm silver particles show well dispersed hybrid materials in the PES membrane.

### 3. Antimicrobial test

Biofilms of Pseudomonas aeruginosa are grown on the membranes of 1.27 cm diameter using batch-flow biofilm reactor for 48 hr. The amount of biofilm is estimated using a standard phenol-sulfuric acid carbohydrate assay. PS-co-MA-silver blended PES membranes showed up to 44% less biofilm growth than control PES membrane.

## Claims

1. An antimicrobial article comprising:
(i) a substrate;
(ii) a composite particle comprising a metal particle and an amphiphilic copolymer dispersed in the substrate.
wherein the amphiphilic copolymer comprises a first portion adapted to interact with the metal particles and a second portion adapted to interact with the substrate.

2. An antimicrobial article according to claim 1 wherein the substrate is a thermoplastic or crosslinked polymer.

3. An antimicrobial article according to claim 1 wherein the substrate is a hydrophobic thermoplastic polymer.

4. An antimicrobial article according to claim 1 wherein the metal particles comprise at least one metal selected from the group consisting of gold, silver, copper, zinc, titanium, palladium, platinum, iron, zirconium or an oxide thereof.

5. An antimicrobial article according to claim 4 wherein the metal particles are silver.

6. An antimicrobial article according to claim 1 wherein, the amphiphilic copolymer is a diblock or comb copolymer wherein the first portion is hydrophilic and the second portion is hydrophobic.

7. An antimicrobial article according to claim 1 wherein, the amphiphilic copolymer comprising a hydrophilic portion derived from monomers such that they may be responsive to changes in temperature, pH, solvent conditions or ionic strength, thereby providing routes to smart antimicrobial materials in which the release of the metal particle can be controlled in response to such stimuli.

8. An antimicrobial article according to claim 1 wherein the hydrophilic portion is derived from a monomer comprising a carbonyl or amino or amide or pyridyl or nitrile or hydroxyl or cyano, or urethanes or ether or thiol or any acid functional group or any electronegative moieties containing monomers or any ligands containing monomers which can have capable of interacting with metal.

9. An antimicrobial article according to claim 1 wherein the hydrophobic portion is derived from a monomer with at least one aromatic group.

10. An antimicrobial article according to claim 1 wherein the first portion to the second portion of the amphiphilic copolymer be in the range of 1:0.10 to 0.10:1

11. An antimicrobial article according to claim 1 comprising from about 0.5 to 75 wt% of the amphiphilic copolymer and from about 0.01 to 50 wt % of metal particles.

12. An antimicrobial article which is in the form of a membrane.

13. A process for the preparation of a composite particle comprising the steps of:
(i) providing a mixture comprising a precursor of a metal particle and an amphiphilic copolymer; and
(ii) reacting the precursor under conditions allowing formation of the metal particle in the presence of the amphiphilic copolymer.

14. A process according to claim 11 wherein the amphiphilic copolymer encapsulates the metal particle.

15. Use of a composite particle as defined in claim 12 for the manufacturing of an antimicrobial article.
